# EUROPÄISCHE PATENTSCHRIFT

(11) **EP 3 019 244 B1**
(45) Veröffentlichungstag und Bekanntmachung des Hinweises auf die Patenterteilung: **28.06.2017**
(21) Anmeldenummer: 14757828.0
(22) Anmeldetag: 09.07.2014
(51) Int. Cl.: A62B 3/00, F16G 15/06

(54) **SPREIZERSPITZE FÜR EIN BERGEGERÄT**
SPREADER TIP FOR A RESCUE TOOL
POINTE D'ÉCARTEUR POUR UN APPAREIL DE SAUVETAGE

(30) Priorität: 11.07.2013 AT 5010313 U
(43) Veröffentlichungstag der Anmeldung: 18.05.2016
(73) Patentinhaber: Weber-Hydraulik GmbH, 4460 Losenstein (AT)
(72) Erfinder: HERWIG, Peter, 98593 Floh-Seligenthal (DE); SCHMOLLNGRUBER, Johann, 4463 Großraming (AT); STROHMEIER, Kurt, 4421 Aschach an der Steyr (AT)
(74) Vertreter: Burger, Hannes
(86) Internationale Anmeldenummer: PCT/AT2014/050155
(87) Internationale Veröffentlichungsnummer: WO 2015/003198

(56) Entgegenhaltungen:
- AT-U1- 10 110
- DE-C1- 19 812 454
- GB-A- 2 254 580

## Beschreibung

Die Erfindung betrifft eine Spreizerspitze, sowie ein mit dieser Spreizerspitze ausgestattes Bergegerät, wie dies in den Ansprüchen 1 und 16 angegeben ist.

Aus der AT 010 110 U1 derselben Anmelderin ist ein Bergegerät mit zangenartigen Spreizarmen bekannt, welche zumindest an einander zugewandten Innenseitenflächen der Spreizarme Oberflächenbereiche aufweisen, in denen eine Verschleißfestigkeit ausgebildet ist, die größer ist als die Verschleißfestigkeit benachbarter Teile. Weiters ist die Oberfläche der Spreizarme, die im Bereich von Angriffsflächen an Objekten liegt, mit vorstehenden Ausformungen versehen, um einem Abgleiten gegenüber den Objekten einen hohen Widerstand entgegen zu setzen. Außerdem sind an den Enden der Spreizarme auswechselbare Spreizerspitzen angeordnet, welche aus einem hochfesten und verschleißfesten, bevorzugt vergüteten, Werkstoff gefertigt sind. Die Spreizerspitzen sind aus einem derartigen Material gefertigt, da auch an den Spreizerspitzen durch eine Ausbildung mit gezahnter oder gezackter Oberfläche ein hoher Widerstand gegen Abgleiten eines zu bearbeitenden Bleches entgegengesetzt werden soll. Diese Erhöhungen an der Oberfläche der Spreizerspitze sollen dabei durch den Arbeitseinsatz nicht übermäßig verschleißen und auch nicht verbogen werden. Weiters soll die Spreizerspitze eine ausreichende Biegefestigkeit aufweisen, um die hohen Kräfte, welche während des Arbeitseinsatzes des Bergegerätes an der Spreizerspitze wirken, aufnehmen zu können, ohne dabei zerstört zu werden. Die Spreizerspitzen sind durch einen Bolzen am Spreizarm befestigt und dadurch manuell leicht lösbar und austauschbar.

Die in der AT 010 110 U1 beschriebene Ausführung besitzt den Nachteil, dass bei der Auswahl eines Werkstoffes für die Spreizerspitze nicht alle Anforderungen, die an die Eigenschaften der Spreizerspitze gestellt werden, erfüllt werden können. Dies resultiert daraus, dass verschiedene Materialeigenschaften eines Werkstoffes sich gegenseitig beeinflussen. Beispielsweise kann ein Werkstoff, der eine hohe Biegefestigkeit und hohe Duktilität aufweist, nur begrenzt gleichzeitig eine hohe Oberflächenhärte und eine gute Verschleißfestigkeit aufweisen. Da jedoch eine hohe Biegefestigkeit zwingend erforderlich ist, um die auf die Spreizerspitze einwirkenden Kräfte aufnehmen zu können, ist die Verschleißfestigkeit, besonders von weit vorstehenden Teilen, wie z.B. Zacken oder Zahnfortsätzen, welche sehr beansprucht werden, meistens nur bedingt gegeben.

Aus der DE 198 12 454 C1 und der GB 2 254 580 A sind weitere Spitzen für Spreizer bekannt.

Der vorliegenden Erfindung liegt die Aufgabe zugrunde, eine verbesserte Spreizerspitze zum auswechselbaren Befestigen an Spreizarmen eines Bergegerätes zu schaffen, wobei die Spreizerspitze eine hohe Biegefestigkeit aufweisen soll, um hohe Kräfte beim Einsatz des Bergegerätes aufnehmen zu können. Darüber hinaus soll die Spreizerspitze an lokal hoch verschleißbeanspruchten Stellen eine hohe Oberflächenhärte und Verschleißfestigkeit aufweisen, um bei mehrmaligem Gebrauch des Bergegerätes nicht übermäßigen Abnutzungserscheinungen ausgesetzt zu sein. Außerdem soll bei einem Bergeeinsatz von der Spreizerspitze ein hoher Widerstand gegen Abgleiten von Objekten entgegengesetzt werden. Durch diese Maßnahmen sollen die Qualitätsnachteile sowie das Risiko eines Gebrechens der bekannten Ausführungen eliminiert bzw. reduziert werden.

Diese Aufgabe der Erfindung wird durch die Maßnahmen gemäß Anspruch 1 gelöst, insbesondere durch eine Spreizerspitze mit an einer Wirkfläche der Spreizerspitze eingesetzten Einsatzelementen.

Erfindungsgemäß ist eine Spreizerspitze zur auswechselbaren Befestigung an zwei zangenartig zusammenwirkenden Spreizarmen eines Bergegerätes ausgebildet, wobei an einer Wirkfläche der Spreizerspitze zumindest ein gegenüber dieser vorragendes Einsatzelement angeordnet ist, welches zur Spreizerspitze unterschiedliche Werkstoffeigenschaften aufweist. Durch die Verwendung unterschiedlicher Werkstoffe für Spreizerspitze und Einsatzelement können an die unterschiedlichen Belastungsarten angepasste Materialeigenschaften gewählt werden. Vorteilhaft ist bei der erfindungsgemäßen Ausbildung, dass durch die Einsatzelemente in der Spreizerspitze zusätzlicher Halt gegenüber dem Abrutschen eines zu bearbeitenden Objektes gegeben ist. Dabei kann das Einsatzelement im Hinblick auf die vorrangig geforderten Werkstoffeigenschaften optimiert werden, wie z.B. hohe Verschleißfestigkeit, oder eine hohe Druckfestigkeit, aufweisen. Dabei kann gleichzeitig die Spreizerspitze die geforderten Werkstoffeigenschaften, wie eine hohe Biegefestigkeit und hohe Duktilität aufweisen. Das Einsatzelement kann durch eine vorteilhafte Formgebung in der Anwendung des Bergegerätes leicht in die zu spreizenden Materialien eindringen, indem es diese verformt. Dadurch wird dem Abrutschen gegenüber Objekten, beispielsweise Blechteilen eines Fahrzeuges ein guter Widerstand entgegen gesetzt. Somit ist die Anwendung eines Bergegerätes mit einer derartig ausgebildeten Spreizerspitze sehr vorteilhaft gegenüber einem Bergegerät mit herkömmlichen Spreizerspitzen.

Weiters ist es zweckmäßig, wenn die Einsatzelemente mit einer Verschleißfestigkeit ausgebildet sind, die größer ist als eine Verschleißfestigkeit der Spreizerspitze. Dies ist von besonderem Vorteil, da durch das Eindringen in die Materialien der zu spreizenden Materialien ein erhöhter Verschleiß zu erwarten ist. Die in diesem Anwendungsfall zu erwartende Verschleißform, ist der abrasive Verschleiß, welcher aufgrund der Relativbewegung zwischen dem Einsatzelement und dem Material, das gespreizt werden soll auftritt. Geprüft wird der Verschleiß mittels Taber-Abraser nach ISO 9352, ASTM D 1044 oder DIN EN-Norm 438 - 2.6. Darüber hinaus ist es zweckmäßig, wenn die Einsatzelemente eine höhere Druckfestigkeit und/oder Härte aufweisen als die Vergleichswerte der Spreizerspitze. Vorteilhaft ist hierbei, dass für das Einsatzelement durch eine erhöhte Druckfestigkeit von etwa 4000-5900 N/mm² und eine hohe Härte von etwa Vickershärte HV30: 1300-2400 ein relativ spröder Werkstoff verwendet werden kann, welcher eine geringere Biegefestigkeit aufweist, als der Werkstoff der Spreizerspitze. Dadurch können die lokal an der Spreizerspitze benötigten Materialeigenschaften vorteilhaft eingesetzt werden, wodurch die Spreizerspitze als gesamtes sehr effizient gestaltet werden kann. Erfindungsgemäß sind die Einsatzelemente stiftförmig mit oder ohne Absatz ausgebildet und in der Wirkfläche in die Spreizerspitze eingesetzt. Vorteilhaft bei der Verwendung von stiftförmigen Einsatzelementen ist, dass in der Spreizerspitze Bohrungen vorgesehen sein können, in welche die Einsatzelemente eingesetzt werden. Es kann jedoch auch vorgesehen sein, dass wenn die Spreizerspitze in einem Gussverfahren hergestellt wird, anstatt der Bohrungen, welche nachträglich in die Spreizerspitze eingebracht werden, Ausnehmungen vorgesehen sind, in welche Einsatzelemente aufgenommen werden. Weiters ist vorteilhaft, dass stiftförmige Einsatzelemente einfach und kostengünstig zu beziehen sind, wodurch der Fertigungsaufwand für eine Spreizerspitze mit derartigen Einsatzelementen verhältnismäßig gering ausfallen kann. Sind die stiftförmigen Einsatzelemente zusätzlich mit einem Absatz versehen, so hat dies den vorteilhaften Effekt, dass die während des Spreizvorganges auftretenden Kräfte vom Einsatzelement über die Stirnfläche des Absatzes in die Spreizerspitze übertragen werden können.

Ferner kann es vorteilhaft sein, dass die Einsatzelemente mittels einer stoffschlüssigen Verbindung, beispielsweise einer Klebeverbindung, oder einer Lötverbindung, mit der Spreizerspitze verbunden sind. Der große Vorteil einer stoffschlüssigen Verbindung liegt darin, dass sowohl das Einsatzelement als auch die Spreizerspitze einfach ausgeführt werden können und keine besondere Oberflächengeometrie, wie Befestigungsgewinde, aufweisen müssen. Auch die Fertigungstoleranzen können moderat ausfallen, da etwaige kleinere Spalte durch einen Kleber ausgeglichen werden können.

Alternativ oder zusätzlich kann vorgesehen sein, dass die Einsatzelemente mittels einer formschlüssigen Verbindung, beispielsweise einer Verzahnung oder das Hintergreifen eines am Einsatzelement ausgebildeten Absatzes, in der Spreizerspitze befestigt sind. Vorteilhaft ist hierbei, dass durch das Fixieren des Einsatzelementes mittels einer formschlüssigen Verbindung, dieses leichter aus der Spreizerspitze entfernt werden kann, um beispielsweise ein beschädigtes oder verschlissenes Einsatzelement leicht austauschen zu können. Die Einsatzelemente können beispielsweise einen Absatz aufweisen, in welchen ein Sicherungselement eingreift, welches mittels einer Schraubverbindung an der Spreizerspitze befestigt wird. Eine derartige Verbindung kann ähnlich ausgeführt sein, wie die Aufnahme eines Wendeschneidplättchens in einem Drehmeißel. Eine weitere Möglichkeit besteht darin, dass das Einsatzelement, wenn es als stiftförmiges Element mit Ansatz ausgebildet ist mit einer Art Überwurfmutter mit Außengewinde in der Spreizerspitze durch Einschrauben befestigt wird. Es ist auch denkbar, dass das Einsatzelement mit einem Gewinde versehen ist und so direkt in die Spreizerspitze eingeschraubt werden kann.

In einer weiteren Ausführungsform kann vorgesehen sein, dass die Einsatzelemente mittels einer reibschlüssigen Verbindung, beispielsweise durch Einsatz einer Klemmleiste, in die Spreizerspitze eingebracht sind. Vorteilhaft kann hierbei sein, dass durch das Fixieren des Einsatzelementes mittels einer formschlüssigen Verbindung, dieses leicht herausgenommen werden kann, um beispielsweise ein beschädigtes oder verschlissenes Einsatzelement leicht austauschen zu können. Im Gegensatz zu einer möglichen Fixierung des Einsatzelementes mittels einer formschlüssigen Verbindung ist hierbei keine besondere Ausgestaltung des Einsatzelementes notwendig, um dieses in der Spreizerspitze aufnehmen zu können. Dadurch ergibt sich der weitere Vorteil, dass das Einsatzelement als Standardprodukt ausgeführt werden kann, und keine spezielle Ausführung für den Einsatz in einer Spreizerspitze angefertigt werden muss.

Ferner kann vorgesehen sein, dass die Einsatzelemente bevorzugt durch Sinterteile, insbesondere Hartmetall gebildet sind. Vorteilhaft ist hierbei, dass Hartmetall die Anforderungen nach Oberflächenhärte und Verschleißfestigkeit optimal erfüllt. Derartige Hartmetallteile können in Serienproduktion gefertigt werden und sind in deren Werkstoffeigenschaften optimal, sowie kostengünstig zu erwerben.

Weiters ist es zweckmäßig, wenn die Einsatzelemente in mehreren Reihen mit unterschiedlichen Abständen zur keilförmigen Spitze der Spreizerspitze angeordnet sind. Vorteilhaft ist hierbei, dass durch die Verwendung von mehreren Einsatzelementen mit unterschiedlichen Abständen zur keilförmigen Spitze der Spreizerspitze ein großer Bereich der Spreizerspitze mit derartigen Einsatzelementen ausgebildet werden kann, sodass die vorteilhaften Eigenschaften des Einsatzelementes über einen großen Wirkbereich der Spreizerspitze und bei verschiedenen Spaltmaßen der aufzuspreizenden Gegenstände eingesetzt werden können.

Ferner ist es zweckmäßig, wenn von mehreren gleich großen Teilabschnitten der Wirkfläche an dem der keilförmigen Spitze der Spreizerspitze nächstliegenden Teilabschnitt eine geringere Anzahl von Einsatzelementen angeordnet ist, als bei einem der weiter entfernten Teilabschnitte. Durch eine Bohrung die zur Aufnahme eines Einsatzelementes in der Spreizerspitze dient, wird die Spreizerspitze geschwächt, wodurch der Wirkquerschnitt zur Aufnahme eines Biegemomentes in der Spreizerspitze verringert wird. Dadurch werden auch die von der Spreizerspitze aufnehmbaren Kräfte vermindert. Vorteilhaft nach der oben beschriebener Anordnung der Einsatzelemente in der Spreizerspitze ist, dass bei der keilförmigen Spreizerspitze im Bereich, welcher eine niedrige Querschnittshöhe aufweist beispielsweise nur eine Bohrung zur Aufnahme eines Einsatzelementes vorgesehen ist. In einem von der keilförmigen Spitze der Spreizerspitze weiter entfernten Teilabschnitt, der bereits eine größere Querschnittshöhe aufweist, können mehrere Bohrungen zur Aufnahme eines Einsatzelementes vorgesehen sein. Dadurch kann die Biegefestigkeit der Spreizerspitze optimal über deren gesamte Länge verteilt ausgebildet werden.

Weiters kann vorgesehen sein, dass die Einsatzelemente an ihrem außerhalb der Spreizerspitze liegenden Abschnitt spitzförmig, zahnförmig oder zackenförmig ausgebildet sind. Vorteilhaft ist bei einer solchen Ausbildung, dass das spitzförmige Einsatzelement beim Gebrauch des Bergegerätes leichter in die zu verformenden Materialien eindringt und somit der Widerstand gegen Abrutschen eines Objektes optimal gewährleistet ist.

Ferner kann vorgesehen sein, dass an einer Wirkfläche eine Ausnehmung zur Aufnahme eines an einer damit zusammenwirkenden zweiten Spreizerspitze befestigten Einsatzelementes angeordnet ist. Dies ist besonders vorteilhaft, wenn an zwei Spreizarmen angeordnete Spreizerspitzen an deren einander zugewandten Innenflächen mit Einsatzelementen ausgestattet sind. Durch die Ausnehmungen können derartig ausgebildete Spreizerspitzen so weit zusammengeführt werden, dass deren einander zugeordnete Innenflächen einander kontaktieren können. Dabei kann der gegenüber der Spreizerspitze vorragende Abschnitt eines in einer Spreizerspitze angebrachten Einsatzelementes in einer ausreichend groß gestalteten Ausnehmung der gegenüber liegenden zweiten Spreizerspitze aufgenommen werden. Durch diese Maßnahmen stehen die Einsatzelemente einem vollständigen Schließen der Spreizarme nicht im Weg. Die Einsatzelemente und die Ausnehmungen für die temporäre Aufnahme eines gegenüber der Spreizerspitze vorragenden Abschnittes eines Einsatzelementes einer gegenüberliegenden zweiten Spreizerspitze können in verschiedenen Bereichen an der Spreizerspitze angeordnet sein. Beispielsweise kann in einem gewissen Abstand von der keilförmigen Spitze der Spreizerspitze ein Einsatzelement auf einer Hälfte der Wirkfläche der Spreizerspitze angeordnet sein. An der zweiten Hälfte der Wirkfläche der Spreizerspitze kann in einem gleichen Abstand von der keilförmigen Spitze der Spreizerspitze eine Ausnehmung für die temporäre Aufnahme eines gegenüber der Spreizerspitze vorragenden Abschnittes eines Einsatzelementes einer weiteren Spreizerspitze ausgebildet sein. Dadurch können zwei baugleiche Spreizerspitzen, wenn diese einander gegenüber liegen so zusammengeführt werden, dass ein gegenüber der Spreizerspitze vorragender Abschnitt eines Einsatzelements in einer Ausnehmung an der gegenüberliegenden Spreizerspitze aufgenommen werden kann. Eine weitere Möglichkeit besteht darin, dass zwei unterschiedlich ausgebildete Spreizerspitzen verwendet werden, wobei bei einer Spreizerspitze in einem gewissen Abstand zur keilförmigen Spitze der Spreizerspitze die Einsatzelemente angeordnet sind und an der weiteren Spreizerspitze die Ausnehmungen für die temporäre Aufnahme eines gegenüber der Spreizerspitze vorragenden Abschnittes eines Einsatzelementes der gegenüberliegenden Spreizerspitze ausgebildet sind. Die Ausnehmung kann hierbei als Sackloch ausgeführt werden, wobei die Tiefe der Ausnehmung so dimensioniert werden kann, dass die Ausnehmung genau so tief ist, dass der gegenüber der Spreizerspitze vorragende Abschnitt eines Einsatzelementes einer gegenüberliegenden Spreizerspitze gerade aufgenommen werden kann. Das heißt dass die Ausnehmung nur geringfügig tiefer ist, als die Höhe der gegenüber der Spreizerspitze vorragende Abschnitt eines Einsatzelementes.

Darüber hinaus kann es zweckmäßig sein, dass die Ausnehmung in Form einer Durchgangsbohrung ausgeführt ist. Besonders vorteilhaft ist hierbei, dass Materialablagerungen, welche sich während des Gebrauches in der Ausnehmung ansammeln durch die rückwärtige Öffnung an der Spreizerspitze wieder ausgeschieden werden können. Dadurch können diese Materialansammlungen, welche zu einer Funktionsminderung führen können, wenn sie die Ausnehmung verschließen, weitestgehend vermieden werden. Werden die Materialansammlungen wieder erwarten nicht durch ein Einsatzelement der Gegenüberliegenden Spreizerspitze durch die Durchgangsbohrung zu der rückwärtigen Öffnung gedrückt, so kann mittels eines Durchschlages, oder eines Bohrers die Ausnehmung von diesen Materialansammlungen befreit werden.

Schließlich kann vorgesehen sein, dass an eine Bohrung in der ein Einsatzelement angeordnet ist, eine Durchgangsbohrung angeschlossen ist. Vorteilhaft ist hierbei, dass im Falle eines notwendigen Austausches eines Einsatzelementes, dieses mittels eines Durchschlages leicht von einer an der Spreizerspitze gegenüberliegenden Wirkfläche her aus seiner Aufnahme herausgeschlagen werden kann, wodurch ein Austausch der Einsatzelemente erleichtert wird. Diese Durchgangsbohrung kann, wenn ein Einsatzelement mit Absatz verwendet wird, den gleichen Durchmesser haben, wie der Durchmesser der Bohrung in der ein Einsatzelement aufgenommen ist. Hierbei werden die Kräfte, welche auf das Einsatzelement ausgeübt werden, über den Absatz in die Spreizerspitze übertragen. Wenn ein Einsatzelement ohne Absatz verwendet wird kann die Durchgangsbohrung auch einen kleineren Durchmesser, als die Bohrung zur Aufnahme eines Einsatzelementes haben, um so die auf das Einsatzelement wirkenden Kräfte in die Spreizerspitze übertragen zu können. An einer Spreizerspitze kann eine Kombination dieser verschiedenen Varianten von Durchgangsbohrungen, oder eine Kombination mit Bohrungen zur Aufnahme von Einsatzelementen, welche keine Bohrung aufweisen vorkommen.

Zum besseren Verständnis der Erfindung wird diese anhand der nachfolgenden Figuren näher erläutert.

Es zeigen jeweils in stark vereinfachter, schematischer Darstellung:
- Fig. 1: eine Vorderansicht eines Bergegerätes mit Spreizarm und Spreizerspitze;
- Fig. 2: eine Draufsicht eines Bergegerätes mit Spreizarm und Spreizerspitze;
- Fig. 3: eine perspektivische Ansicht einer Spreizerspitze;
- Fig. 4: eine Vorderansicht von zwei einander gegenüber liegenden Spreizerspitzen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

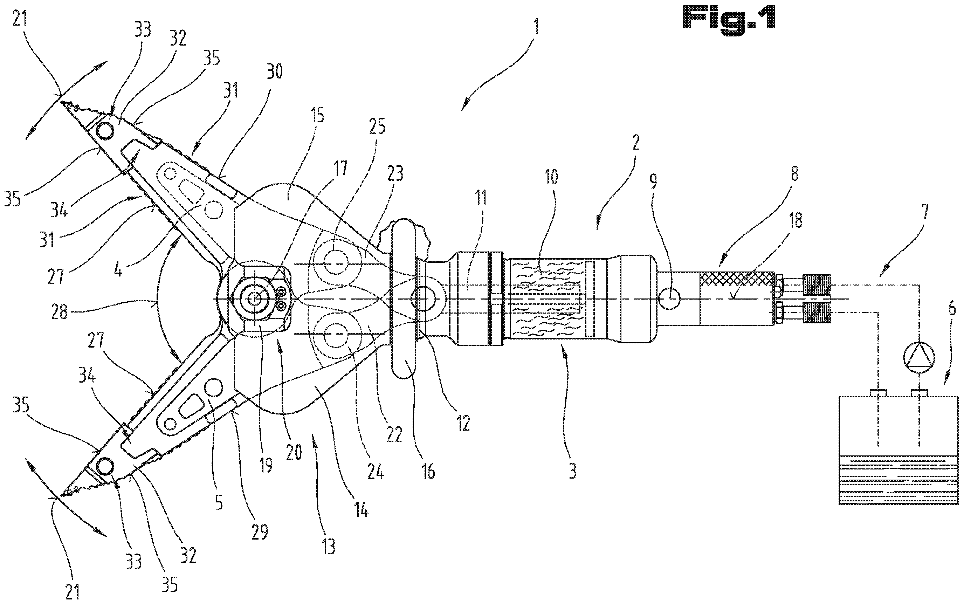

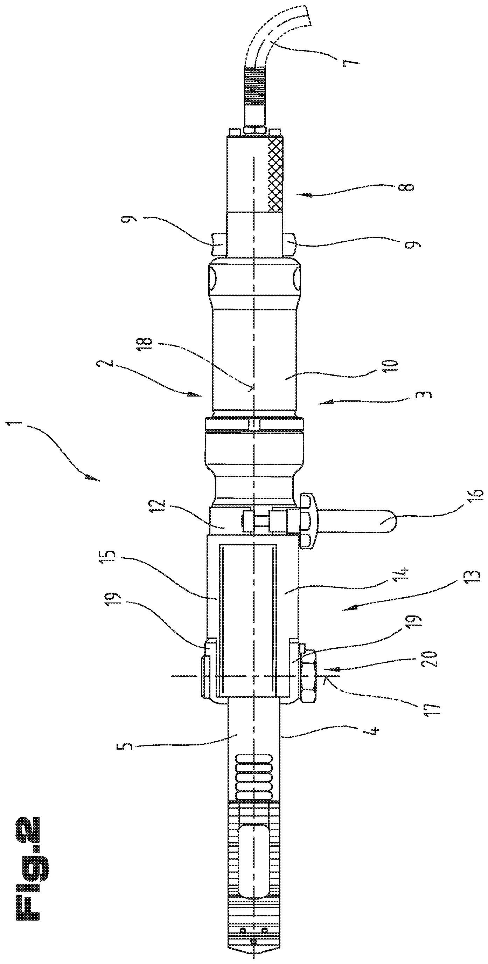

In den Fig. 1 und 2 ist ein Bergegerät 1 mit zangenartig verstellbaren, über eine lineare Antriebsvorrichtung 2 an einem Zylinderkörper 3 verstellbar gelagerten Spreizarmen 4, 5 gezeigt.

Die Antriebsvorrichtung 2 ist im gezeigten Ausführungsbeispiel durch einen von einem Hydraulikaggregat 6 über Zu- und Ableitungen 7 und einem rohrförmigen Handgriff 8 mit in diesem integrierten Steuermitteln 9, sowie einem Hydraulikzylinder 10 mit einem in linearer Richtung verstellbaren Stellmittel 11 gebildet.

An einem vom Stellmittel 11 durchragten Stirnflansch 12 des Hydraulikzylinders 10 ist ein Lagergehäuse 13 ausgebildet das im Wesentlichen durch zwei parallel in einem Abstand zueinander angeordneten Lagerplatten 14, 15 gebildet ist. Weiters weist das Bergegerät 1 bevorzugt einen Tragegriff 16 auf.

An den Lagerplatten 14, 15 ist eine Schwenkachse 17 ausbildend, welche zu einer Längsmittelachse 18 des Zylinderkörper 3 senkrecht verläuft, ein Schwenklager 19 einer Schwenklageranordnung 20 für die Spreizarme 4, 5 angeordnet. In dieser Schwenklageranordnung 20 sind die Spreizarme 4, 5 um die Schwenkachse 17 - gemäß Doppelpfeile 21 - schwenkbar gelagert.

Eine Antriebsverbindung zwischen dem linear verstellbaren Stellmittel 11 des Hydraulikzylinders 10 und den Spreizarmen 4, 5 wird durch mit dem Stellmittel 11 und jeweils einem der Spreizarme 4, 5 gelenkig verbundenen Übertragungshebeln 22, 23 gebildet.

Durch eine exzentrische Anordnung im Bezug auf die Längsmittelachse 18 von Schwenklagern 24, 25, in denen die Übertragungshebel 22, 23 mit den Spreizarmen 4, 5 gelenkig verbunden sind, wird eine Übertragung der Linearverstellung des Stellmittels 11 in eine Schwenkbewegung der Spreizarme 4, 5, bei einer Verstellung des Stellmittels 11 erreicht. Dabei werden bei einem Ausfahren des Stellmittels 11 die Spreizarme 4, 5 aufeinander zubewegt und beim Einfahren des Stellmittels 11 die Spreizarme 4, 5 in eine Öffnungsstellung verstellt.

Ein Verstellweg des Stellmittels 11 ist in Verbindung mit der Hebelgeometrie derart ausgelegt, dass in einer ausgefahrenen Endstellung des Stellmittels 11 die Innenseitenflächen 26, 27 fluchtend mit der Längsmittelachse 18 verlaufen. In einer Öffnungsstellung der Spreizarme 4, 5 ergibt sich ein Winkel 28 zwischen den Innenseitenflächen 26, 27.

Diese Ausbildung ermöglicht mit dem Bergegerät 1 auf ein nicht weiter dargestelltes Objekt eine Quetschkraft zwischen den einander gegenüber liegenden Innenseitenflächen 26, 27 bei einer Verstellung der Spreizarme 4, 5 in Richtung der Längsmittelachse 18 auszuüben, wie auch eine Aufweitekraft bei einer Verstellung der Spreizarme 4, 5 in eine Öffnungsstellung mit einander entgegen gesetzten Außenseitenflächen 29, 30 der Spreizarme 4, 5 auszuüben.

Damit eignet sich das Bergegerät 1 zum Bergen von, z.B. mit einem Fahrzeug verunfallten Personen aus einem Fahrzeuginnenraum, der aufgrund von Deformationen des Fahrzeugaufbaues nur durch gewaltsames Schaffen von Öffnungen, z.B. durch Quetschvorgänge an Karosserieteilen oder Aufspreizen von Objekten, wie Türen, Dachöffnungen etc., zugänglich gemacht werden muss.

Die Spreizarme 4, 5 als sind als Schmiedeformteile aus Rohlingen aus einer hochfesten Al-Legierung in einer Schmiedepresse gefertigt, wodurch eine hohe Endqualität und geringer Nachbearbeitungsaufwand erreicht wird. Gleichzeitig wird durch die Wahl des Materials eine hohe mechanische Festigkeit zur Übertragung hoher Kräfte erreicht, wie sie bei der Anwendung des Bergegerätes 1 auftreten. Neben einer hohen Verformungsfestigkeit ist für einen ungestörten Langzeiteinsatz aber auch eine hohe Verschleißfestigkeit an den Angriffsflächen der Spreizarme 4, 5 von wesentlicher Bedeutung. Weiters soll eine Abgleitsicherheit von Objektteilen, an denen die Spreizarme 4, 5 angesetzt werden, erreicht werden.

Zum Erzielen eines hohen Widerstandes gegen ein Abgleiten eines Objektes sind an den Innenseitenflächen 26, 27 und gegebenenfalls auch an den Außenseitenflächen 29, 30 rippenartige Erhöhungen 31 ausgebildet. Diese weisen durch eine hohe Oberflächenhärte eine erhöhte Verschleißfestigkeit auf.

Weiters sind an den Spreizarmen 4, 5 Spreizerspitzen 32 angeordnet, welche aus einem zu den Spreizarmen 4, 5 unterschiedlichen Material gefertigt sind. Diese Spreizerspitzen 32 sind bevorzugt aus hochfestem und verschleißfestem, bevorzugt vergütetem, Werkstoff gefertigt. Sie sind für unterschiedliche Verwendungsfälle konzipiert und für ein rasches Wechseln sind Bolzen 33 als Befestigungsmittel vorgesehen, welche manuell entfernbar sind. Zur Übertragung hoher Kräfte ist weiters ein Formschluss zwischen den Endbereichen 34 der Spreizarme 4, 5 und den Spreizerspitzen 32 vorgesehen. Besonders Biegekräfte, welche durch den Spreizvorgang in die Spreizerspitze 32 eingeleitet werden, können durch diese formschlüssige Verbindung zwischen Spreizerspitze 32 und Spreizarmen 4, 5 gut aufgenommen und von der Spreizerspitze 32 in die Spreizarme 4, 5 übertragen werden.

Weiter ist an den innen und außen liegenden Wirkflächen 35 der Spreizerspitze 32 eine gezahnte Oberfläche 36 vorgesehen, durch die ein Abgleiten des Bergegerätes 1 beim Auseinanderspreizen, beziehungsweise Quetschen von Fahrzeugteilen verringert oder vermieden wird.

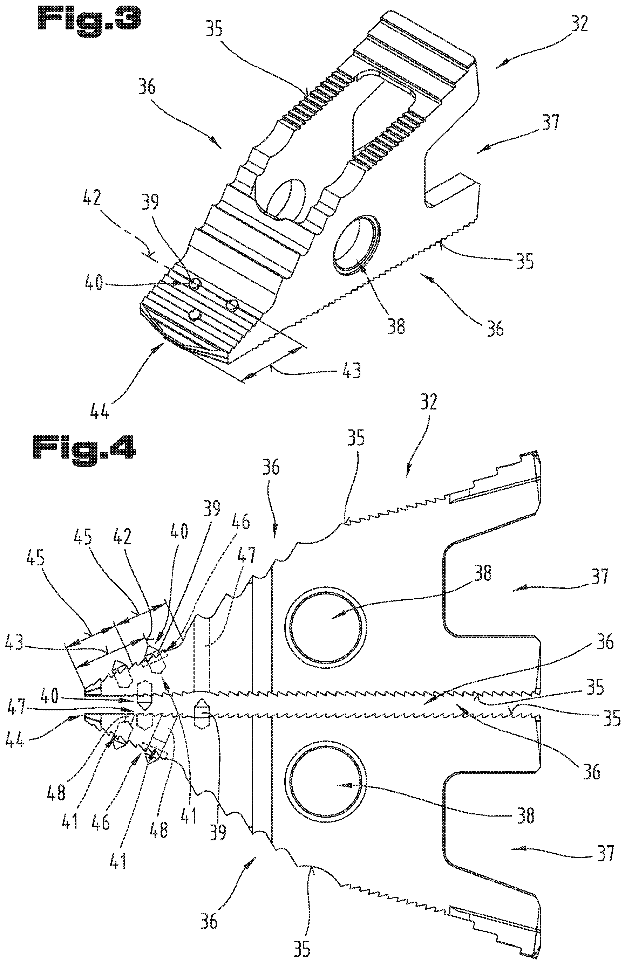

In Fig. 3 ist eine Spreizerspitze 32 in einer perspektivischen Ansicht dargestellt. Gut erkennbar ist hier eine Aufnahmeöffnung 37 in die der Endbereich 34 eines Spreizarmes 4, 5 eingreift, wodurch die formschlüssige Verbindung der beiden Teile gebildet ist. Für eine fixe Verbindung wird der Bolzen 33 in eine Bohrung 38 der um die Aufnahmeöffnung 37 als Gabel ausgebildeten Spreizerspitze 32 eingesetzt.

Wie in dieser Ansicht gut ersichtlich ist die gezahnte Oberfläche 36 der Wirkflächen 35 nicht über die gesamte Wirkfläche 35 gleichmäßig ausgebildet, sondern können unterschiedliche Zahnformen und Zahngrößen vorhanden sein, um einen optimalen Widerstand gegen das Abgleiten von Objekten auszubilden.

Um den Widerstand gegen das Abgleiten von Objekten weiter zu erhöhen und dadurch die Funktionalität des Bergegerätes 1 zu optimieren sind Einsatzelemente 39 vorgesehen, welche in der Wirkfläche 35 in die Spreizerspitze 32 eingesetzt sind und gegenüber der Wirkfläche 35 nach vorragen. Die Einsatzelemente 39 können auf verschiedene Arten unter Zuhilfenahme von verschiedenen Befestigungsmöglichkeiten in die Spreizerspitze 32 eingesetzt werden. Der große Vorteil bei der Verwendung von Einsatzelementen 39 wie sie hier dargestellt sind ist, dass wenn sie in ihrem gegenüber der Spreizerspitze 32 vorragendem Abschnitt 40 spitzförmig ausgebildet sind, sehr effektiv gegen das Abgleiten von Objekten wirken. Dies resultiert daraus, dass durch die Anspitzung der Einsatzelemente 39, diese in Objekte, beispielsweise Blechteile von Autos, eindringen können, wodurch eine formschlüssige Verbindung zwischen Einsatzelement 39 und einem Blechteil hergestellt wird.

Um das Eindringen der Einsatzelemente 39 in Blechteile zu gewährleisten, ist es notwendig, dass die Einsatzelemente 39 eine hohe Härte und Druckfestigkeit aufweisen. Dies soll sicherstellen, dass die Einsatzelemente 39 während des Gebrauches des Bergegerätes 1 nicht verformt werden. Weiters kann durch eine hohe Härte der abrasive Verschleiß vermindert werden. Diese Verschleißform tritt aufgrund der Reibung auf, wenn das Einsatzelement 39 in ein anderes Material eindringt oder entlang der Oberfläche eines zu verformenden Objekts rutscht. Durch die Relativbewegung kann es hierbei zu diversen Ablösungen am Einsatzelement 39 kommen, welche in Form von Verschleiß auftreten. Ein optimaler Werkstoff für eine Anwendung als stiftförmiges Einsatzelement 39 ist Hartmetall, da zum einen die Werkstoffeigenschaften sehr vorteilhaft für den vorliegenden Anwendungsfall sind und zum anderen die Herstellung derartiger Hartmetallstifte sehr gut automatisiert werden kann.

Die Einsatzelemente 39 sind in der in den Fig. 1-4 dargestellten Ausführungsvariante mit einem speziellen Klebstoff, z.B. einem Zwei-Komponenten Klebstoff auf Kunstharzbasis eingeklebt. Hierzu müssen in der Spreizerspitze 32 Bohrungen 41 vorgesehen sein, welche mit den stiftförmigen Einsatzelementen 39 vorzugsweise eine enge Spielpassung oder eine Übergangspassung bilden. Diese enge Passung ist sinnvoll, da bei einer wechselnden Belastung der Klebstoff somit einer vergleichsweise geringen Beanspruchung unterliegt. Der Klebstoff sollte außerdem nicht temperaturempfindlich sein, da es beispielsweise im Falle eines Fahrzeugbrandes vorkommen kann, dass sehr heiße Teile mit dem Bergegerät 1 bearbeitet werden müssen. Weiters sollte der Klebstoff beständig gegen die Einwirkung diverser chemischer Stoffe sein, da im Zusammenhang mit Fahrzeugen diverse Flüssigkeiten in Kontakt mit einem Bergegerät kommen können, welche eine Klebstelle beschädigen können.

Die Anordnung der Einsatzelemente 39 muss nicht zwingend einem gewissen Muster entsprechen. Es hat sich gezeigt, dass es vorteilhaft ist, wenn die Einsatzelemente 39 in Reihen 42 angeordnet sind, wobei die einzelnen in den Reihen 42 eingesetzten Einsatzelemente 39 vorteilhafterweise einen gleichen Abstand 43 zur keilförmigen Spitze 44 der Spreizerspitze 32 aufweisen. Es ist jedoch auch denkbar, dass die Abstände 43 der Einsatzelemente 39 zur keilförmigen Spitze 44 der Spreizerspitze 32 alle unterschiedlich groß sind, sodass die Einsatzelemente 39 unregelmäßig auf der Wirkfläche 35 verteilt sind.

Weiters ist es vorteilhaft, wenn die Einsatzelemente 39 so angeordnet sind, dass auf gleich große Teilabschnitte 45 der Wirkfläche 35 gesehen, in einem zur keilförmigen Spitze 44 der Spreizerspitze 32 näherstehenden Teilabschnitt 45 weniger Einsatzelemente 39 angeordnet sind, als in einem Teilabschnitt 45 welcher von der keilförmigen Spitze 44 der Spreizerspitze 32 weiter entfernt ist. Der Vorteil, der sich aus dieser Anordnung ergibt liegt darin, dass die Biegefestigkeit der Spreizerspitze 32 nicht übermäßig nachteilig beeinflusst wird. Eine positive Beeinflussung der Biegefestigkeit der Spreizerspitze 32 geschieht dadurch, dass durch die Verwendung von weniger Einsatzelementen 39 in einem vorderen Bereich der Spreizerspitze 32, diese nicht übermäßig durch die Bohrungen 41 welche zur Aufnahme der Einsatzelemente 39 dienen, geschwächt wird. Die keilförmige Gestaltung der Spreizerspitze 32, bei der auf einer Seite der Spreizerspitze 32 nur ein dünner Materialquerschnitt vorhanden ist, ergibt sich aus konstruktiven Erfordernissen, da das Bergegerät 1 auch in nur kleine Spalte bei beschädigten Fahrzeugen eindringen muss, um diese aufzuspreizen.

In der Fig. 4 ist eine weitere und gegebenenfalls für sich eigenständige Ausführungsform der Spreizerspitze 32 gezeigt, wobei wiederum für gleiche Teile gleiche Bezugszeichen bzw. Bauteilbezeichnungen wie in den vorangegangenen Fig. 1-3 verwendet werden. Um unnötige Wiederholungen zu vermeiden, wird auf die detaillierte Beschreibung in den vorangegangenen Fig. 1-3 hingewiesen bzw. Bezug genommen.

In Fig. 4 sind zwei einander gegenüberliegende Spreizerspitzen 32 in einer Seitenansicht dargestellt. Hierbei sind die Bohrungen 41 zur Aufnahme der Einsatzelemente 39 gut erkennbar. In der unten liegenden Spreizerspitze 32 ist in einem der Einsatzelemente 39 ein Absatz 46 angedeutet, welcher dazu dienen kann, dass die Kräfte, welche auf das Einsatzelement 39 wirken, auf einer vergrößerten Fläche vom Einsatzelement 39 in die Spreizerspitze 32 übertragen werden können.

Weiters sind in der in Fig. 4 dargestellten Ausführungsform nicht nur an den außenliegenden Wirkflächen 35 Einsatzelemente 39 angeordnet, sondern auch an den einander zugewandten innenliegenden Wirkflächen 35. An diesen ist eine Ausnehmung 47 zur Aufnahme eines Einsatzelementes 39 der gegenüberliegenden Spreizerspitze 32 vorgesehen. Die Ausnehmung 47 dient dazu, dass die beiden innenliegenden Wirkflächen 35 der Spreizerspitzen 32 soweit zusammen geführt werden können, dass diese einander berühren, also noch näher zusammengeführt werden als in Fig. 4 dargestellt. Die Ausnehmung 47 sollte dabei so groß ausgeführt werden, dass das Einsatzelement 39 auch berührungslos in die Ausnehmung 47 gleiten kann, wenn die Position der beiden Spreizerspitzen 32 zueinander nicht exakt übereinstimmt. Daher kann die Ausnehmung 47 der Spreizerspitze 32 großzügig ausgeführt werden, um ein Aufnehmen des gegenüber liegenden Einsatzelements 39 jeder Zeit zu gewährleisten.

Die Ausnehmung 47, welche der keilförmigen Spitze 44 der Spreizerspitze 32 näher liegt ist als Sackloch dargestellt. Im Gegensatz dazu ist die Ausnehmung 47, welche von der keilförmigen Spitze 44 der Spreizerspitze 32 weiter entfernt angeordnet ist als Durchgangsloch dargestellt. Hierbei ist es möglich, dass mehrere oder auch keine der Ausnehmungen 47 als Durchgangsloch ausgeführt werden.

Weiters ist in der Fig. 4 eine Ausführungsmöglichkeit dargestellt, in der anschließend an eine Bohrung 41, welche für die Aufnahme eines Einsatzelementes 39 dient, eine Durchgangsbohrung 48 angeschlossen. Wie in Fig. 4 ersichtlich kann diese Durchgangsbohrung 48 einen gleichen Durchmesser wie die Bohrung 41 aufweisen, oder einen kleineren Durchmesser besitzen. Diese Durchgangsbohrungen 48 dienen einem leichteren Austausch von Einsatzelementen 39 und sind nicht zwingend erforderlich. Vielmehr kann auch vorgesehen sein, dass nur an bestimmten Bohrungen 41 eine derartige Durchgangsbohrung 48 angeschlossen ist.

Die Ausführungsbeispiele zeigen mögliche Ausführungsvarianten der Spreizerspitze 32 wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1-4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Bergegerätes 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Bergegerät | 31 | Erhöhung |
| 2 | Antriebsvorrichtung | 32 | Spreizerspitze |
| 3 | Zylinderkörper | 33 | Bolzen |
| 4 | Spreizarm | 34 | Endbereich |
| 5 | Spreizarm | 35 | Wirkfläche |
| 6 | Hydraulikaggregat | 36 | gezahnte Oberfläche |
| 7 | Leitung | 37 | Aufnahmeöffnung |
| 8 | Handgriff | 38 | Bohrung |
| 9 | Steuermittel | 39 | Einsatzelement |
| 10 | Hydraulikzylinder | 40 | Abschnitt |
| 11 | Stellmittel | 41 | Bohrung |
| 12 | Stirnflansch | 42 | Reihe |
| 13 | Lagergehäuse | 43 | Abstand |
| 14 | Lagerplatte | 44 | keilförmige Spitze |
| 15 | Lagerplatte | 45 | Teilabschnitt |
| 16 | Tragegriff | 46 | Absatz |
| 17 | Schwenkachse | 47 | Ausnehmung |
| 18 | Längsmittelachse | 48 | Durchgangsbohrung |
| 19 | Schwenklager | | |
| 20 | Schwenklageranordnung | | |
| 21 | Doppelpfeil | | |
| 22 | Übertragungshebel | | |
| 23 | Übertragungshebel | | |
| 24 | Schwenklager | | |
| 25 | Schwenklager | | |
| 26 | Innenseitenfläche | | |
| 27 | Innenseitenfläche | | |
| 28 | Winkel | | |
| 29 | Außenseitenfläche | | |
| 30 | Außenseitenfläche | | |

## Patentansprüche

1. Spreizerspitze (32) zur auswechselbaren Befestigung an zwei zangenartig zusammenwirkenden Spreizarmen (4) eines Bergegerätes (1), wobei an einer Wirkfläche (35) der Spreizerspitze (32), zumindest ein gegenüber dieser vorragendes Einsatzelement (39) angeordnet ist, welches zur Spreizerspitze (32) unterschiedliche Werkstoffeigenschaften aufweist, **dadurch gekennzeichnet, dass** die Einsatzelemente (39) stiftförmig mit oder ohne Absatz (46) ausgebildet sind und in der Wirkfläche (35) in die Spreizerspitze (32) eingesetzt sind.

2. Spreizerspitze nach Anspruch 1, **dadurch gekennzeichnet, dass** die Einsatzelemente (39) aus einem Hartmetall gebildet sind und somit mit einer Verschleißfestigkeit ausgebildet sind, die größer ist als eine Verschleißfestigkeit der Spreizerspitze (32).

3. Spreizerspitze nach Anspruch 1 oder 2, **dadurch gekennzeichnet, dass** die Einsatzelemente (39) aus einem Hartmetall gebildet sind und somit eine höhere Druckfestigkeit und/oder Härte aufweisen als die Vergleichswerte der Spreizerspitze (32).

4. Spreizerspitze nach einem der vorhergehenden Ansprüche, **dadurch gekennzeichnet, dass** die Einsatzelemente (39) mittels einer stoffschlüssigen Verbindung, beispielsweise einer Klebeverbindung, oder einer Lötverbindung, mit der Spreizerspitze (32) verbunden sind.

5. Spreizerspitze nach einem der Ansprüche 1-3, **dadurch gekennzeichnet, dass** die Einsatzelemente (39) mittels einer formschlüssigen Verbindung, beispielsweise einer Verzahnung oder einem Hintergreifen eines am Einsatzelement (39) ausgebildeten Absatzes (46), in der Spreizerspitze (32) angebracht sind.

6. Spreizerspitze nach einem der Ansprüche 1-3, **dadurch gekennzeichnet, dass** die Einsatzelemente (39) mittels einer reibschlüssigen Verbindung, beispielsweise durch Einsatz einer Klemmleiste, in der Spreizerspitze (32) angebracht sind.

7. Spreizerspitze nach einem der vorhergehenden Ansprüche, **dadurch gekennzeichnet, dass** die Einsatzelemente (39) bevorzugt durch Sinterteile, insbesondere Hartmetall gebildet sind.

8. Spreizerspitze nach einem der vorhergehenden Ansprüche, **dadurch gekennzeichnet, dass** die Einsatzelemente (39) in mehreren Reihen (42) mit unterschiedlichen Abständen (43) zur keilförmigen Spitze (44) der Spreizerspitze (32) angeordnet sind.

9. Spreizerspitze nach einem der vorhergehenden Ansprüche, **dadurch gekennzeichnet, dass** von mehreren gleich großen Teilabschnitten (45) der Wirkfläche (35) an dem der keilförmigen Spitze (44) der Spreizerspitze (32) nächstliegenden Teilabschnitt (45) eine geringere Anzahl von Einsatzelementen (39) angeordnet ist, als bei einem der weiter entfernten Teilabschnitte (45).

10. Spreizerspitze nach einem der vorhergehenden Ansprüche, **dadurch gekennzeichnet, dass** die Einsatzelemente (39) an ihrem außerhalb der Spreizerspitze (32) liegenden Abschnitt (40) spitzförmig ausgebildet sind.

11. Spreizerspitze nach einem der vorhergehenden Ansprüche, **dadurch gekennzeichnet, dass** an einer Wirkfläche (35) eine Ausnehmung (47) zur Aufnahme eines Einsatzelementes (39) einer damit zusammenwirkenden zweiten Spreizerspitze (32) angeordnet ist.

12. Spreizerspitze nach Anspruch 11, **dadurch gekennzeichnet, dass** die Ausnehmung (47) in Form einer Durchgangsbohrung ausgeführt ist.

13. Spreizerspitze nach einem der vorhergehenden Ansprüche, **dadurch gekennzeichnet, dass** an eine Bohrung (41) in der ein Einsatzelement (39) angeordnet ist, eine Durchgangsbohrung (48) angeschlossen ist.

14. Bergegerät (1) mit zwei zangenartig zusammenwirkenden, angetriebenen, Spreizarmen (4) mit auswechselbaren Spreizerspitzen (32), **dadurch gekennzeichnet, dass** zumindest eine der Spreizerspitzen (32) nach einem der vorhergehenden Ansprüche ausgebildet ist.

## Claims

1. Spreader tip (32) for replaceable attachment to two pincer-like co-operating spreader arms (4) of a rescue tool (1), at least one insert element (39), which is mounted on a working face (35) of the spreader tip (32) and which protrudes from the working face (35) and which has different material properties in comparison with the spreader tip (32), **characterized in that** the insert elements (39) are based on a pin-shaped design with or without a land (46) and are inserted into the spreader tip (32) in the working face (35).

2. Spreader tip according to claim 1, **characterized in that** the insert elements (39) are made from a carbide and are thus designed to have a wear resistance that is greater than a wear resistance of the spreader tip (32).

3. Spreader tip according to claim 1 or 2, **characterized in that** the insert elements (39) are made from a carbide and thus have a higher compression strength and/or hardness than the comparative values of the spreader tip (32).

4. Spreader tip according to one of the preceding claims, **characterized in that** the insert elements (39) are joined to the spreader tip (32) by means of a firmly bonded connection, for example an adhesive join or a soldered connection.

5. Spreader tip according to one of claims 1 to 3, **characterized in that** the insert elements (39) are mounted in the spreader tip (32) by means of a positive connection, for example a toothing or engagement behind a land (46) provided on the insert element (39).

6. Spreader tip according to one of claims 1 to 3, **characterized in that** the insert elements (39) are mounted in the spreader tip (32) by means of a frictional connection, for example by inserting a clamping bar.

7. Spreader tip according to one of the preceding claims, **characterized in that** the insert elements (39) are preferably provided in the form of sintered parts, in particular made from carbide.

8. Spreader tip according to one of the preceding claims, **characterized in that** the insert elements (39) are disposed in several rows (42) at different distances (43) from the wedge-shaped tip (44) of the spreader tip (32).

9. Spreader tip according to one of the preceding claims, **characterized in that** of several part-portions (45) of the working face (35) of identical size, the part-portion (45) lying closest to the wedge-shaped tip (44) of the spreader tip (32) has a lesser number of insert elements (39) than one of the part-portions (45) disposed farther away.

10. Spreader tip according to one of the preceding claims, **characterized in that** the insert elements (39) are of a pointed design at their portion (40) lying outside the spreader tip (32).

11. Spreader tip according to one of the preceding claims, **characterized in that** a recess (47) is provided on a working face (35) for accommodating an insert element (39) of a second spreader tip (32) co-operating therewith.

12. Spreader tip according to claim 11, **characterized in that** the recess (47) is provided in the form of an end-to-end bore.

13. Spreader tip according to one of the preceding claims, **characterized in that** a bore (41) in which an insert element (39) is disposed connects with an end-to-end bore (48).

14. Rescue tool (1) with two driven, pincer-like co-operating spreader arms (4) having replaceable spreader tips (32), **characterized in that** at least one of the spreader tips (32) is designed according to one of the preceding claims.

## Revendications

1. Pointe d'écartement (32) pour une fixation interchangeable à deux bras d'écartement (4), interagissant à la manière d'une pince, d'un appareil de sauvetage (1), moyennant quoi, au niveau d'une surface active (35) de la pointe d'écartement (32), se trouve au moins un insert (39) dépassant de celle-ci, qui présente des propriétés de matériaux différentes de la pointe d'écartement (32), **caractérisée en ce que** les inserts (39) sont réalisés sous la forme de tiges avec ou sans épaulement (46) et sont insérés dans la surface active (35), dans la pointe d'écartement (32).

2. Pointe d'écartement selon la revendication 1, **caractérisée en ce que** les inserts (39) sont constitués d'un métal dur et sont donc réalisés avec une résistance à l'usure qui est supérieure à une résistance à l'usure de la pointe d'écartement (32).

3. Pointe d'écartement selon la revendication 1 ou 2, **caractérisée en ce que** les inserts (39) sont constitués d'un métal dur et présentent donc une résistance à la pression et/ou une dureté supérieure aux valeurs de comparaison de la pointe d'écartement (32).

4. Pointe d'écartement selon l'une des revendications précédentes, **caractérisée en ce que** les inserts (39) sont reliés, par liaison de matière, par exemple une liaison collée ou une liaison par brasage, avec la pointe d'écartement (32).

5. Pointe d'écartement selon l'une des revendications 1 à 3, **caractérisée en ce que** les inserts (39) sont montés, par complémentarité de forme, par exemple une denture ou l'emboîtement d'un épaulement (46) réalisé sur l'insert (39), dans la pointe d'écartement (32).

6. Pointe d'écartement selon l'une des revendications 1 à 3, **caractérisée en ce que** les inserts (39) sont montés, par complémentarité de forme, par exemple par l'insertion d'une barre de raccordement, dans la pointe d'écartement (32).

7. Pointe d'écartement selon l'une des revendications précédentes, **caractérisée en ce que** les inserts (39) sont constitués de préférence de pièces frittées, plus particulièrement de métal dur.

8. Pointe d'écartement selon l'une des revendications précédentes, **caractérisée en ce que** les inserts (39) sont disposés sur plusieurs rangées (42) avec des distances (43) différentes par rapport à la pointe cunéiforme (44) de la pointe d'écartement (32).

9. Pointe d'écartement selon l'une des revendications précédentes, **caractérisée en ce que**, sur plusieurs portions (45), de tailles identiques, de la surface active (35), au niveau de la portion (45) la plus proche de la pointe cunéiforme (44) de la pointe d'écartement (32), se trouve un nombre d'insert (39) inférieur au nombre d'inserts disposés sur une des portions (45) se trouvant plus loin.

10. Pointe d'écartement selon l'une des revendications précédentes, **caractérisée en ce que** les inserts (39) sont réalisés en forme de pointes au niveau de leur portion (40) se trouvant à l'extérieur de la pointe d'écartement (32).

11. Pointe d'écartement selon l'une des revendications précédentes, **caractérisée en ce que**, sur une surface active (35), se trouve un évidement (47) pour le logement d'un insert (39) d'une deuxième pointe d'écartement (32), interagissant avec celle-ci.

12. Pointe d'écartement selon la revendication 11, **caractérisée en ce que** l'évidement (47) est réalisé sous la forme d'un alésage de passage.

13. Pointe d'écartement selon l'une des revendications précédentes, **caractérisée en ce que**, au niveau d'un alésage (41), dans lequel est disposé un insert (39), est raccordé un alésage de passage (48).

14. Appareil de sauvetage (1) avec deux bras d'écartement (4) entraînés, interagissant à la manière d'une pince, avec des pointes d'écartement (32) interchangeables, **caractérisé en ce qu'**au moins une des pointes d'écartement (32) est réalisée selon l'une des revendications précédentes.
